# EUROPEAN PATENT APPLICATION

(11) **EP 4 542 760 A1**
(43) Date of publication of application: **23.04.2025**
(21) Application number: 23877431.9
(22) Date of filing: 11.07.2023
(51) Int. Cl.: H01M 50/574, H01M 50/569, H01M 50/502, H01M 50/581, H01M 50/583

(54) **BATTERY PACK FOR DISCONNECTING FAULTY BATTERY CELL**

(30) Priority: 14.10.2022 KR 20220132744
(71) Applicant: LG Energy Solution, Ltd., Seoul 07335 (KR)
(72) Inventor: LEE, Chang Bog, Daejeon 34122 (KR)
(74) Representative: Plasseraud IP
(86) International application number: PCT/KR2023/009873
(87) International publication number: WO 2024/080501

(57) **Abstract**

A battery pack according to an embodiment disclosed herein includes a battery module including a plurality of battery cell units connected to one another in parallel, a main power line electrically connected to the plurality of battery cell units in the battery module, in which a first battery cell unit among the plurality of battery cell units includes a first battery cell, a first cell bus bar configured to electrically connect a positive electrode of the first battery cell and a negative electrode of the first battery cell to the main power line, and a first switch connected to the first battery cell in parallel, a sensor unit configured to sense states of a plurality of battery cells included in the battery module, and a controller configured to close the first switch to disconnect the first cell bus bar when identifying a failure of the first battery cell based on a state of the first battery cell, sensed through the sensor unit.

## Description

### [TECHNICAL FIELD]

### CROSS-REFERENCE TO RELATED APPLICATION

This application claims priority to and the benefit of Korean Patent Application No. 10-2022-0132744 filed in the Korean Intellectual Property Office on October 14, 2022, the entire contents of which are incorporated herein by reference.

### TECHNICAL FIELD

Embodiments disclosed herein relate to a battery pack that disconnects a failing battery cell.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

A battery pack used as a power source for an electronic device such as an electric vehicle, etc., includes a plurality of battery modules, each of which may include one or more battery cells. A battery cell is a component that is repeatedly chargeable/dischargeable and is capable of generating a potential difference through an electrochemical reaction. The battery cell may include a positive electrode, a negative electrode, a separator, and an electrolyte.

In a sense that the plurality of battery cells that are secondary batteries may form one battery pack, and a plurality of battery packs form one large-capacity battery, it is important to safely maintain the batteries when compared to general portable electric products.

Various methods such as using a battery management system (BMS) to secure safety of the batteries are presently attempted, but a fundamental safety securing technique for damages and failures of battery cells has not yet been developed due to electrochemical nonlinear and unstable features of the batteries. In particular, for the battery pack including the plurality of battery cells, the entire battery pack has to be replaced even when any one unit cell fails.

### [DISCLOSURE]

### [TECHNICAL PROBLEM]

Conventionally, when a failure of a battery cell is diagnosed, a main switching device (e.g., a relay) or a main protection device (e.g., pyrofuse) is opened, thereby cutting off a power line of a battery module including a failing battery cell. However, for an electric vehicle, when the power line of the battery module is cut off according to this method, power supply to a motor is stopped, causing the vehicle to stop.

Embodiments disclosed herein aim to provide a battery pack and an operating method thereof in which when a failure of a battery cell is identified, the failing battery cell is disconnected without affecting other battery cells included in the battery module.

Technical problems of the embodiments disclosed herein are not limited to the above-described technical problems, and other unmentioned technical problems would be clearly understood by one of ordinary skill in the art from the following description.

### [TECHNICAL SOLUTION]

A battery pack according to an embodiment disclosed herein includes a battery module including a plurality of battery cell units connected to one another in parallel, a main power line electrically connected to the plurality of battery cell units in the battery module, in which a first battery cell unit among the plurality of battery cell units includes a first battery cell, a first cell bus bar configured to electrically connect a positive electrode of the first battery cell and a negative electrode of the first battery cell to the main power line, and a first switch connected to the first battery cell in parallel, a sensor unit configured to sense states of a plurality of battery cells included in the battery module, and a controller configured to close the first switch to disconnect the first cell bus bar when identifying a failure of the first battery cell based on a state of the first battery cell, sensed through the sensor unit.

In the battery pack according to an embodiment disclosed herein, the controller may be further configured to open the first switch after elapse of a designated time after closing the first switch.

In the battery pack according to an embodiment disclosed herein, the first cell bus bar may be irreversibly disconnected by heat applied from short-circuit current flowing through the first battery cell, the first cell bus bar, and the first switch for the designated time.

In the battery pack according to an embodiment disclosed herein, the first cell bus bar may include a breaking portion broken by the heat applied for the designated time, and the breaking portion may be positioned between a first point and a second point where the first cell bus bar and the first switch are electrically connected to each other.

In the battery pack according to an embodiment disclosed herein, a second battery cell unit among the plurality of battery cell units may include a second battery cell, a second cell bus bar configured to electrically connect a positive electrode of the second battery cell and a negative electrode of the second battery cell to the main power line, and a second switch connected to the second battery cell in parallel, and the controller may be further configured to close the second switch to disconnect the second cell bus bar when identifying a failure of the second battery cell based on a state of the second battery cell, sensed through the sensor unit.

The battery pack according to an embodiment disclosed herein may further include a plurality of other battery cell units serially connected to the plurality of battery cell units and connected in parallel to one another, in which a third battery cell unit among the plurality of battery cell units includes a third battery cell, a third cell bus bar configured to electrically connect a positive electrode of the third battery cell and a negative electrode of the third battery cell to the main power line, and a third switch connected to the third battery cell in parallel, and the controller may be further configured to close the second switch to disconnect the third cell bus bar when identifying a failure of the third battery cell based on a state of the third battery cell, sensed through the sensor unit.

In the battery pack according to an embodiment disclosed herein, the sensor unit may be further configured to sense at least one of voltages, currents, impedances, or temperatures of the plurality of battery cells, and the controller may be further configured to identify a failure of the first battery cell based on at least one of a voltage, a current, an impedance, or a temperature of the first battery cell, sensed through the sensor unit.

### [ADVANTAGEOUS EFFECTS]

According to embodiments disclosed herein, even when a failure of a battery cell is identified, a bus bar connected to the failing battery cell is disconnected, thereby safely managing a battery pack without cutting off a main power line connected to other battery cells.

Moreover, various effects recognized directly or indirectly from the disclosure may be provided.

### [DESCRIPTION OF DRAWINGS]

FIG. 1 is a block diagram showing a configuration of a general battery pack.
FIG. 2 illustrates a configuration of a battery pack according to an embodiment.
FIG. 3A shows states of a battery cell, a cell bus bar, and a switch before a failure of a first battery cell is identified, according to an embodiment.
FIG. 3B shows states of a battery cell, a cell bus bar, and a switch when a first switch is closed for a designated time due to identification of a failure of a first battery cell, according to an embodiment.
FIG. 3C shows states of a battery cell, a cell bus bar, and a switch after a first switch is closed for a designated time due to identification of a failure of a first battery cell, according to an embodiment.
FIG. 4 is an operating flowchart of a battery pack according to an embodiment.

### [MODE FOR INVENTION]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present document and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment of the disclosure, a method according to various embodiments of the disclosure disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

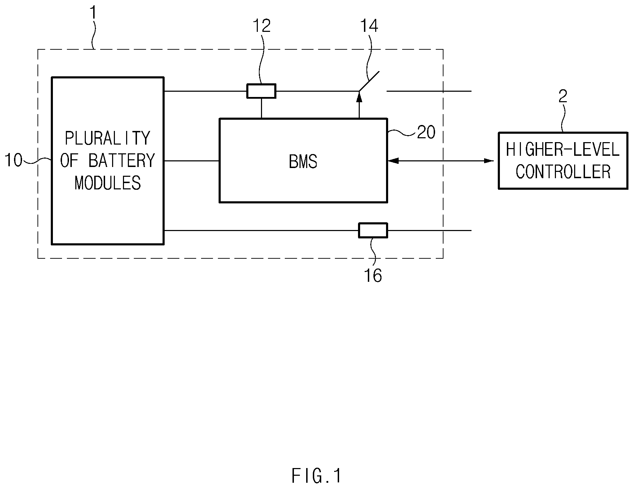

FIG. 1 is a block diagram of a general battery pack.

Referring to FIG. 1, a battery control system including a battery pack 1 and a higher-level controller 2 included in a higher-level system according to an embodiment of the present disclosure is schematically shown.

As shown in FIG. 1, the battery pack 1 may include a battery module 10 that includes one or more battery cells and is chargeable/dischargeable, a switching unit 14 serially connected to a positive (+) terminal side or a negative (-) terminal side of the battery module 10 to control a charging/discharging current flow of the battery module 10, and a battery management system 20 for control and management to prevent overcharging and over-discharging by monitoring voltage, current, temperature, etc., of the battery pack 1. The battery pack 1 may include the battery module 10, the sensor 12, the switching unit 14, and the battery management system 20 provided in plural.

Herein, as the switching unit 14 which is an element for controlling a current flow for charging or discharging of the plurality of battery modules 10, for example, at least one relay, magnetic contactor, etc., may be used according to specifications of the battery pack 1.

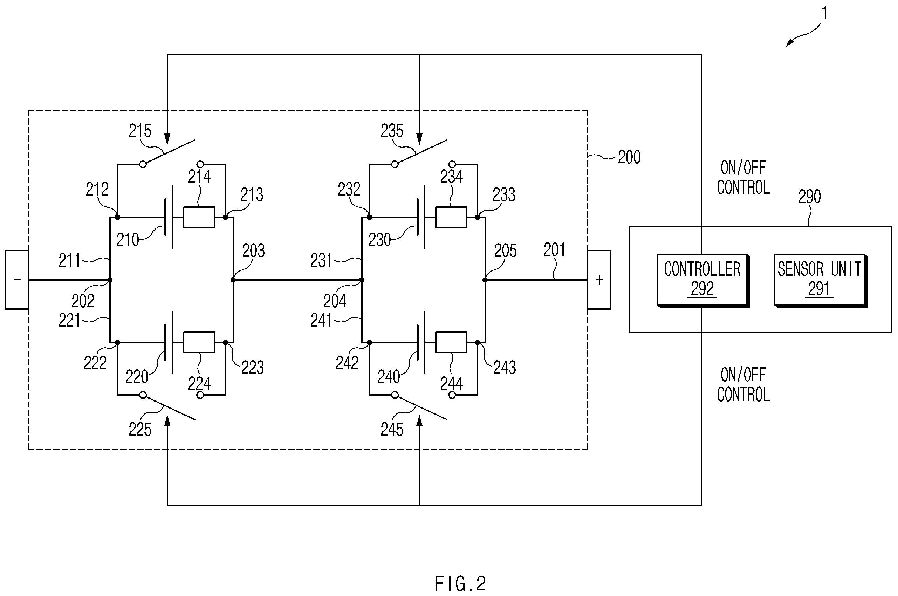

The battery management system 20, which is an interface for receiving measurement values of the above-described various parameter values, may include a plurality of terminals and a circuit, etc., connected thereto to process input values. The battery management system 20 may control on/off of the switching unit 14, e.g., a relay, a contactor, etc., and may be connected to the battery module 10 to monitor the state of each battery module 10. According to an embodiment, the battery management system 20 may include a cell bus bar control device 290 of FIG. 2. According to another embodiment, the battery management system 20 may be different from the cell bus bar control device 290 of FIG. 2. That is, the cell bus bar control device 290 of FIG. 2 may be included in the battery pack 1 and may be configured as another device outside the battery pack 1.

The higher-level controller 2 may transmit a control signal regarding the battery module 10 to the battery management system 20. Thus, the battery management system 20 may also be controlled in terms of an operation thereof based on a signal applied from the higher-level controller 2.

FIG. 2 illustrates a configuration of a battery pack according to an embodiment.

Referring to FIG. 2, the battery pack 1 may include a battery module 200 and the cell bus bar control device 290. Depending on an embodiment, the cell bus bar control device 290 may be included in the battery management system 20 of FIG. 1 or may be another device that is different from the battery management system 20 of FIG. 1.

The battery module 200 may include a main power line 201 and a plurality of battery cell units. Herein, the battery cell unit may include a battery cell 210, 220, 230 or 240, a cell bus bar 211, 221, 231, or 241, and a switch 215, 225, 235, or 245. For example, a first battery cell unit may include a first battery cell 210, a first cell bus bar 211, and a first switch 215.

While it is shown in FIG. 2 that the battery module 200 includes four battery cell units, the battery module 200 may include two or more battery cell units without being limited thereto. In addition, it is shown in FIG. 2 that every two battery cell units connected in parallel are connected in series through the main power line 201, but the present disclosure is not limited thereto. For example, the number of battery cell units connected in parallel between the main power lines 201 may not be limited. However, at least two battery cell units need to be connected to the main power line 201 in parallel.

The main power line 201 may be electrically connected to a positive electrode and a negative electrode of the battery module 200 in the battery module 200. According to an embodiment, the main power line 201 may be electrically connected to the battery cell 210, 220, 230, or 240 through the cell bus bar 211, 221, 231, or 241. The main power line 201 may transfer power output from the plurality of battery cells 210, 220, 230, and 240 to an outside of the battery module 200, or transfer power supplied from the outside of the battery module 200 to the plurality of battery cells 210, 220, 230, and 240.

The cell bus bar 211, 221, 231, or 241 may be configured to electrically connect each of a positive electrode and a negative electrode of the battery cell 210, 220, 230, or 240 to the main power line 201.

According to an embodiment, a first cell bus bar 211 may be electrically connected to a positive electrode and a negative electrode of the first battery cell 210, and may be electrically connected to a first point 202 and a second point 203 of the main power line 201. A second cell bus bar 221 may also be electrically connected to a positive electrode and a negative electrode of a second battery cell 220, and may be electrically connected to a first point 202 and a second point 203 of the main power line 201. In this case, the first battery cell 210 and a second battery cell 220 may be branched from the first point 202 and the second point 203 of the main power line 201 through the first cell bus bar 211 and a second cell bus bar 221, thus being connected to each other in parallel.

According to an embodiment, a third cell bus bar 231 may be electrically connected to a positive electrode and a negative electrode of a third battery cell 230, and may be electrically connected to a third point 204 and a fourth point 205 of the main power line 201. A fourth cell bus bar 241 may also be electrically connected to a positive electrode and a negative electrode of a fourth battery cell 240, and may be electrically connected to a third point 204 and a fourth point 205 of the main power line 201. In this case, the third battery cell 230 and the fourth battery cell 240 may be branched from the third point 204 and the fourth point 205 of the main power line 201 through the third cell bus bar 231 and the fourth cell bus bar 241, thus being connected to each other in parallel.

The switch 215, 225, 235, or 245 may be electrically connected to two points on the cell bus bar 211, 221, 231, or 241. According to an embodiment, the switch 215, 225, 235, or 245 may be configured to be opened or closed based on a control signal received from a controller 292.

According to an embodiment, a first switch 215 may be electrically connected to a first point 212 and a second point 213 on the first cell bus bar 211. Herein, the first battery cell 210 may be positioned between the first point 212 and the second point 213 on the first cell bus bar 211. Thus, the first switch 215 may be connected to the first battery cell 210 in parallel through the first point 212 and the second point 213 on the first cell bus bar 211.

According to an embodiment, a second switch 225 may be electrically connected to a third point 222 and a fourth point 223 on the second cell bus bar 221. Herein, the second battery cell 220 may be positioned between the third point 222 and the fourth point 223 on the second cell bus bar 221. Thus, the second switch 225 may be connected to the second battery cell 220 in parallel through the third point 222 and the fourth point 223 on the second cell bus bar 221.

According to an embodiment, a third switch 235 may be electrically connected to a fifth point 232 and a sixth point 233 on the third cell bus bar 231. Herein, the third battery cell 230 may be positioned between the fifth point 232 and the sixth point 233 on the third cell bus bar 231. Thus, the third switch 235 may be connected to the third battery cell 230 in parallel through the fifth point 232 and the sixth point 233 on the third cell bus bar 231.

According to an embodiment, a fourth switch 245 may be electrically connected to a seventh point 242 and an eighth point 243 on the fourth cell bus bar 241. Herein, the fourth battery cell 240 may be positioned between the seventh point 242 and the eighth point 243 on the fourth cell bus bar 241. Thus, the fourth switch 245 may be connected to the fourth battery cell 240 in parallel through the seventh point 242 and the eighth point 243 on the fourth cell bus bar 241.

According to an embodiment, the cell bus bars 211, 221, 231, or 241 may include a breaking portion 214, 224, 234, or 244. According to an embodiment, the breaking portion 214, 224, 234, or 244 may be positioned between two points where the cell bus bar 211, 221, 231, or 241 and the switches 215, 225, 235, or 245 are electrically connected to each other. For example, a first breaking portion 214 may be positioned between the first point 212 and the second point 213 on the first cell bus bar 211. Herein, the first point 212 and the second point 213 may mean points where short-circuit current may flow through the first battery cell 210, the first cell bus bar 211, and the first switch 215 when the first switch 215 is closed.

According to an embodiment, the breaking portion 214, 224, 234, or 244 may be configured to be irreversibly broken by heat applied from short-circuit current flowing through the battery cell 210, 220, 230, or 240, the cell bus bar 211, 221, 231, or 241, and the switch 215, 225, 235, or 245 as the switch 215, 225, 235, or 245 is closed for a designated time. For example, the cell bus bar 211, 221, 231, or 241 may be implemented such that a thickness of the breaking portion 214, 224, 234, or 244 is less than those of other points.

The cell bus bar control device 290 may include a sensor unit 291 and a controller 292.

According to an embodiment, the sensor unit 291 may sense states of the plurality of battery cells 210, 220, 230, and 240. According to an embodiment, the sensor unit 291 may sense at least one of voltages, currents, impedances, or temperatures of the plurality of battery cells 210, 220, 230, and 240. According to an embodiment, the sensor unit 291 may receive a control signal from the controller 292 to sense the states of the plurality of battery cells 210, 220, 230, and 240. The sensor unit 291 may sense the states of the plurality of battery cells 210, 220, 230, and 240 each time when receiving the control signal from the controller 292. According to an embodiment, the sensor unit 291 may transfer data related to the sensed states to the controller 292.

The controller 292 may be electrically connected to the sensor unit 291. According to an embodiment, the controller 292 may execute software to control at least one another component connected to the controller 292 and may process or compute various data. According to an embodiment, the controller 292 may control at least one another component connected to the controller 292 to perform an overall operation of the cell bus bar control device 290. The controller 292 may include at least one of processing devices such as an application specific integrated circuit (ASIC), a digital signal processor (DSP), programmable logic devices (PLD), field programmable gate arrays (FPGAs), a central processing unit (CPU), microcontrollers, or microprocessors.

According to an embodiment, the controller 292 may sense states of the plurality of battery cells 210, 220, 230, and/or 240. According to an embodiment, the controller 292 may sense at least one of voltages, currents, impedances, or temperatures of the plurality of battery cells 210, 220, 230, and/or 240 through the sensor unit 291.

According to an embodiment, the controller 292 may identify a failing battery cell. According to an embodiment, the controller 292 may identify whether there is a failing battery cell, based on the states of the plurality of battery cells 210, 220, 230, and/or 240 sensed through the sensor unit 291.

According to an embodiment, the controller 292 may disconnect the cell bus bar electrically connected to the failing battery cell when identifying that there is the failing battery cell.

According to an embodiment, the controller 292 may disconnect the first cell bus bar 211 by controlling the first switch 215 when identifying a failure of the first battery cell 210. According to an embodiment, the controller 292 may disconnect the first cell bus bar 211 by short-circuiting the first switch 215. According to an embodiment, the controller 292 may open the first switch 215 after the elapse of a designated time from short-circuit of the first switch 215. In this case, the first cell bus bar 211 may be irreversibly disconnected by heat applied from short-circuit current flowing through the first battery cell 210, the first cell bus bar 211, and the first switch 215 for the designated time.

When identifying failures of the other battery cells 220, 230, and/or 240 than the first battery cell 210 according to the method, the controller 292 may disconnect the cell bus bar 221, 231, and/or 241 electrically connected thereto.

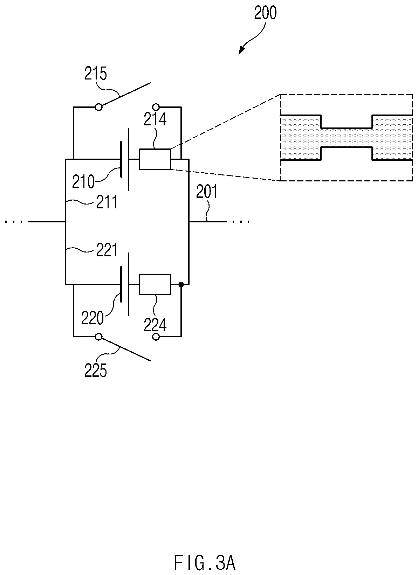

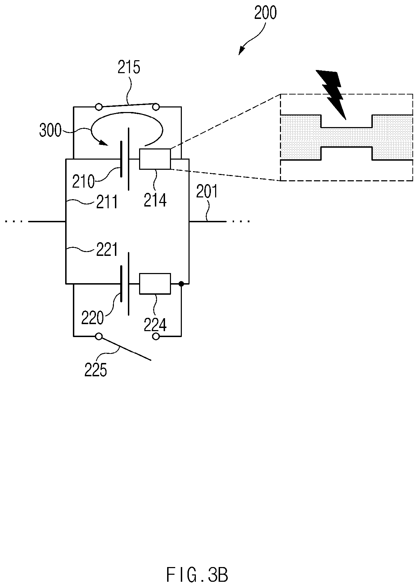

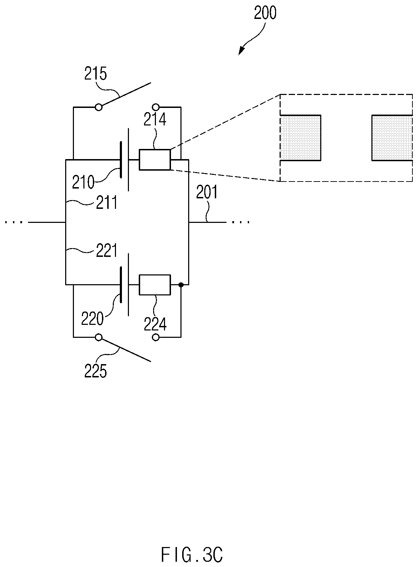

Hereinbelow, referring to FIGS. 3A, 3B, and 3C, an operation of disconnecting the first cell bus bar 211 when identifying a failure of the first battery cell 210 will be described. Components shown in FIGS. 3A, 3B, and 3C may be the same as the main power line 201, the battery cells 210 and 220, the cell bus bars 211 and 221, the breaking portions 214 and 224, and the switches 215 and 225 of FIG. 2.

FIG. 3A shows states of a battery cell, a cell bus bar, and a switch before a failure of a first battery cell is identified, according to an embodiment.

Referring to FIG. 3A, the first switch 215 and the second switch 225 may be in an open state. According to an embodiment, a first breaking portion 214 (and/or a second breaking portion 215) may be implemented as having a thickness less than those of other points of the first cell bus bar 211 (and/or the second cell bus bar 221).

FIG. 3B shows states of a battery cell, a cell bus bar, and a switch when a first switch is closed for a designated time due to identification of a failure of a first battery cell, according to an embodiment.

Referring to FIG. 3b, the first switch 215 may be short-circuited for a designated time according to a control signal received from the controller 292. According to an embodiment, short-circuit current 300 may flow through the first battery cell 210, the first cell bus bar 211, and the first switch 215 for the designated time. In this case, heat generated by the short-circuit current 300 may be applied to the first cell bus bar 211. In this process, the first breaking portion 214 having a thickness less than those of other points of the first cell bus bar 211 may be broken by the heat. For this end, the first breaking portion 214 may be implemented to have a thickness that may be broken by the heat applied for the designated time.

FIG. 3C shows states of a battery cell, a cell bus bar, and a switch after a first switch is closed for a designated time due to identification of a failure of a first battery cell, according to an embodiment.

Referring to FIG. 3C, the first switch 215 may be opened again according to a control signal received from the controller 292. The first breaking portion 214 may be irreversibly broken by the heat applied from the short-circuit current. Thus, the first cell bus bar 211 may be in an irreversibly disconnected state.

As such, upon sensing a failing battery cell (e.g., the first battery cell 210), the battery pack 1 according to an embodiment disclosed herein may disconnect a cell bus bar (e.g., the first cell bus bar 211) connected to the failing battery cell, thereby preventing power transferred through the main power line 201 from being interrupted.

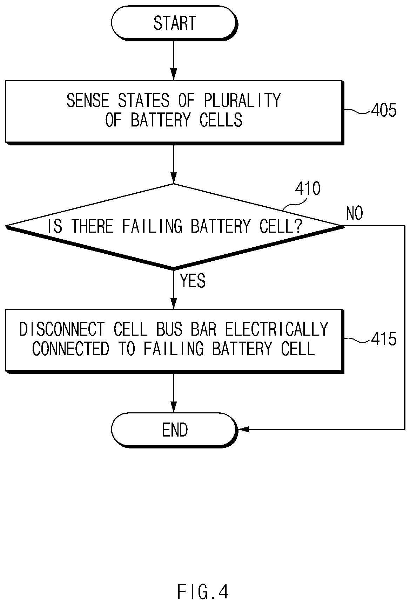

FIG. 4 is an operating flowchart of a battery pack according to an embodiment. FIG. 4 will be described using components of FIG. 2.

The embodiment shown in FIG. 4 may be an example, and an order of operations according to various embodiments of the present disclosure may be different from that shown in FIG. 4, and some operations shown in FIG. 4 may be omitted, the order of the operations may be changed, or the operations may be merged.

Referring to FIG. 4, in operation 405, the battery pack 1 may sense the states of the plurality of battery cells 210, 220, 230, and/or 240. According to an embodiment, the battery pack 1 may sense at least one of voltages, currents, impedances, or temperatures of the plurality of battery cells 210, 220, 230, and/or 240.

In operation 410, it may be identified whether the battery pack 1 includes a failing battery cell. According to an embodiment, the battery pack 1 may identify whether there is the failing battery cell, based on the states of the plurality of battery cells 210, 220, 230, and/or 240 sensed in operation 405.

When it is identified in operation 410 that there is no failing battery cell ('NO'), the battery pack 1 may terminate an operation corresponding to FIG. 4.

When it is identified in operation 410 that there is a failing battery cell ('YES'), the battery pack 1 may disconnect a cell bus bar electrically connected to the failing battery cell in operation 415.

According to an embodiment, the battery pack 1 may disconnect the first cell bus bar 211 by controlling the first switch 215 when identifying a failure of the first battery cell 210. According to an embodiment, the battery pack 1 may disconnect the first cell bus bar 211 by short-circuiting the first switch 215. According to an embodiment, the battery pack 1 may open the first switch 215 after the elapse of a designated time from short-circuit of the first switch 215. In this case, the first cell bus bar 211 may be irreversibly disconnected by heat applied from short-circuit current flowing through the first battery cell 210, the first cell bus bar 211, and the first switch 215 for the designated time.

When identifying failures of the other battery cells 220, 230, and/or 240 than the first battery cell 210 according to the method, the battery pack 1 may disconnect the cell bus bar 221, 231, and/or 241 electrically connected thereto.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. A battery pack comprising:
a battery module having a plurality of battery cell units connected to one another in parallel;
a main power line electrically connected to the plurality of battery cell units in the battery module;
wherein a first battery cell unit of the plurality of battery cell units comprises:
a first battery cell;
a first cell bus bar configured to electrically connect a positive electrode of the first battery cell and a negative electrode of the first battery cell to the main power line; and
a first switch connected to the first battery cell in parallel;
a sensor unit configured to detect a condition of a plurality of battery cells included in the battery module; and
a controller configured to close the first switch to disconnect the first cell bus bar upon identifying a failure of the first battery cell based on a condition of the first battery cell, sensed through the sensor unit.

2. The battery pack of claim 1, wherein the controller is further configured to open the first switch after elapse of a predetermined time after closing the first switch.

3. The battery pack of claim 2, wherein the first cell bus bar is configured to be irreversibly disconnected by heat generated from a short-circuit current flowing through the first battery cell, the first cell bus bar, and the first switch for the a predetermined time.

4. The battery pack of claim 3, wherein the first cell bus bar comprises a breaking portion configured to be broken by the heat applied for the predetermined time, and
the breaking portion being positioned between a first point and a second point where the first cell bus bar and the first switch are electrically interconnected.

5. The battery pack of claim 1, wherein a second battery cell unit of the plurality of battery cell units comprises:
a second battery cell;
a second cell bus bar configured to electrically connect a positive electrode of the second battery cell and a negative electrode of the second battery cell to the main power line; and
a second switch connected to the second battery cell in parallel, and
the controller being further configured to close the second switch to disconnect the second cell bus bar upon identifying a failure of the second battery cell based on the condition of the second battery cell, sensed through the sensor unit.

6. The battery pack of claim 1, further comprising a plurality of other battery cell units serially connected to the plurality of battery cell units and connected in parallel to one another,
wherein a third battery cell unit among the plurality of battery cell units comprises:
a third battery cell;
a third cell bus bar configured to electrically connect a positive electrode of the third battery cell and a negative electrode of the third battery cell to the main power line; and
a third switch connected to the third battery cell in parallel, and
the controller being further configured to close the third switch to disconnect the third cell bus bar upon identifying a failure of the third battery cell based on the condition of the third battery cell, sensed through the sensor unit.

7. The battery pack of claim 1, wherein the sensor unit is further configured to sense at least one of voltages, currents, impedances, or temperatures of the plurality of battery cells, the controller is further configured to identify a failure of the first battery cell based on at least one of the voltage, current, impedance, or temperature of the first battery cell, sensed through the sensor unit.
